# FASCICULE DE BREVET EUROPEEN

(11) **EP 2 849 895 B1**
(45) Date de publication et mention de la délivrance du brevet: **06.07.2016**
(21) Numéro de dépôt: 13725099.9
(22) Date de dépôt: 13.05.2013
(51) Int. Cl.: B09B 3/00, A62D 3/33

(54) **PROCEDE ET DISPOSITIF D'INERTAGE ET DE VALORISATION DES REFIOM, ET AUTRES DECHETS INDUSTRIELS SPECIAUX ANALOGUES**
VERFAHREN UND VORRICHTUNG ZUR INERTISIERUNG UND WIEDERGEWINNUNG VON FLUGASCHE UND ANDEREN ÄHNLICHEN SPEZIELLEN INDUSTRIEABFÄLLEN
METHOD AND APPARATUS FOR INERTING AND RECLAIMING FLY ASH, AND OTHER SIMILAR SPECIAL INDUSTRIAL WASTE

(30) Priorité: 18.05.2012 FR 1201423
(43) Date de publication de la demande: 25.03.2015
(73) Titulaire: "S.A.G.A.C.E." Services en Administration, Gestion et Applications au Conseil à l'Environnement, 75002 Paris (FR)
(72) Inventeur: HUBERT, Jean-Pierre, G., F-45460 Bouzy la Forêt (FR)
(74) Mandataire: Lecomte & Partners
(86) Numéro de dépôt international: PCT/EP2013/059835
(87) Numéro de publication internationale: WO 2013/171169

(56) Documents cités:
- DE-A1- 19 740 477
- FR-A1- 2 792 856

## Description

L'invention concerne un procédé d'inertage et de valorisation des Résidus d'Epuration des Fumées d'incinération des Ordures Ménagères, ci-après dénommés REFIOM. L'invention concerne également les installations pour la mise en oeuvre de tels procédés.

L'incinération des ordures ménagères génère deux types de déchets : les MIOM (Mâchefer d'Incinération d'Ordures Ménagères) et les REFIOM (Résidus d'Epuration des Fumées d'incinération des Ordures Ménagères). Sous le terme REFIOM sont regroupés les cendres sous chaudière, les cendres volantes et les « gâteaux de filtration ». La majeure partie de ces résidus (jusqu'à 90 % en poids) est constituée par des substances minérales dépourvues de nocivité (silice, chaux,...). Le reste, par contre, est constitué de métaux, dont des métaux lourds comme le mercure, le zinc, le plomb, le cuivre, le chrome,.... Les REFIOM concentrent ainsi les polluants contenus dans les déchets incinérés, comme les métaux lourds volatils, des composés chlorés, etc...

Compte tenu de leurs caractéristiques polluantes, notamment de leur teneur élevée (jusqu'à 2% en poids et même parfois au-delà) en métaux lourds aisément entraînables par l'eau, les REFIOM ne sont pas mélangés aux mâchefers et obéissent à un traitement spécifique de stabilisation. Classés dans la catégorie des « déchets industriels spéciaux », les REFIOM sont des déchets ultimes. Ils sont donc stockés, avant enfouissement en décharge, pour les stabiliser et réduire ainsi leur fraction lixiviable. Ils sont ensuite évacués en centres de stockage des déchets ultimes (CSDU) de classe 1, où ils sont réceptionnés en silos. Puis, ils sont, par exemple, mélangés à des liants hydrauliques, et le béton ainsi obtenu, qui constitue un piégeage pour les éléments polluants, est coulé dans des alvéoles spécifiques.

Cela a été pendant longtemps la seule voie possible pour éliminer les REFIOM. Depuis, des techniques de traitement destinées à les stabiliser se sont développées essentiellement selon deux axes. Les procédés de traitement par fusion des cendres, ou de vaporisation après attaque acide en milieu fluidisé d'un côté, et de l'autre les procédés hydro-chimiques de stabilisation, seconde catégorie à laquelle appartient le traitement selon l'invention.

Il est ainsi connu du document WO03/092921, qui est considéré comme l'état de la technique le plus proche et qui décrit un procédé et un dispositif selon le préambule des revendications 1 et 9, un procédé hydrométallurgique de traitement en milieu aqueux des déchets industriels spéciaux contenant des métaux lourds et des sels, tels que les sous-produits d'incinération de combustibles divers et notamment les REFIOM. Ce procédé comprend une opération de lavage au terme de laquelle on recueille la fraction solide lorsqu'elle répond aux conditions de non-nocivité pour l'environnement l'autorisant à être valorisable industriellement. Ce procédé met en oeuvre une étape de maturation du REFIOM avant l'opération de lavage permettant d'obtenir une pâte qui va se transformer rhéologiquement et dans laquelle sont fixés sous forme stable les éléments nocifs.

Malheureusement, il a été constaté que cette étape de mûrissement ne permettait pas d'obtenir une fixation des dioxines. Or la règlementation a évolué et demande aux produits d'être quasiment exempts de traces de dioxines pour pouvoir être valorisés. Plus précisément, la norme réglementaire à respecter pour une valorisation en techniques routières (seuil SETRA) est une teneur en dioxines inférieure à 10 ng TEQ/ kg MS.

On rappelle que les « dioxines » font partie de la famille des Polluants Organiques Persistants (POP) définis non pas par leur formule chimique mais par une toxicité avérée sur la faune et sur la santé humaine, une bioaccumulation, une persistance dans l'environnement et une diffusion à longue distance.

Sous le terme générique « dioxines » on regroupe les polychlorodibenzo-paradioxines (PCDD), les polychlorodibenzofurane (PCDF) apparentés sur le plan structurel et chimique, et certains polychlorobiphényles (PCB), dotés de propriétés toxiques similaires. Lesdits composés sont considérés seuls ou en mélange.

De nombreuses études ont été effectuées concernant les mécanismes de formation des dioxines. Ces études ont mis en évidence des processus de formation hétérogènes. Par exemple, les dioxines peuvent se former suite à l'adsorption de leurs réactifs précurseurs sur de la matière particulaire en suspension ou sur les particules volantes telles que les cendres volantes. Les dioxines se forment à des températures comprises entre 300 et 450°C selon les composés envisagés. La température optimale de formation est voisine de 350°C. Certains auteurs ont constaté la formation de dioxines dès 200°C.

Le document CN101462835 propose de former un ciment hydraulique à partir de REFIOM. Ce procédé inclut des opérations de lavage répétitives du déchet avec en phase finale une étape de destruction thermique des dioxines par chauffage dans un four à ciment entre 1000 et 1450 °C lors d'une opération de clinkerisation.

Malheureusement, les auteurs ont découvert que l'application d'un tel traitement à haute température sur un déchet stabilisé par transformation rhéologique obtenue par une opération de maturation du déchet, déstabilise la structure du déchet inerté ce qui ne lui permet plus d'être valorisable en techniques routières ou stockable dans des décharges de classe 3. Il en résulte que l'application de ce traitement thermique sur un déchet stabilisé implique soit de mettre en oeuvre un lavage excessif des déchets peu compatible avec des exigences de rentabilité industrielle, soit de trouver de nouvelles voies de valorisation du déchet.

D'autres voies de traitement des dioxines dans les déchets spéciaux ont été explorées. Par exemple le document JP2004057934 propose un traitement à l'ozone avec une accélération de la réaction d'oxydation par irradiation aux UV. Le document CN101050862 propose un traitement hydrothermique avec addition d'hydrazine pour le traitement spécifique des dioxines. Ces différents traitements sont complexes à mettre en oeuvre ce qui augmente leur coût.

Il s'avère intéressant de trouver une solution simple et économique de traitement des dioxines contenues dans les déchets spéciaux qui permette un inertage de ces déchets spéciaux en vue d'une valorisation en techniques routières.

L'invention a pour objectif de répondre à au moins un des inconvénients rencontrés par l'art antérieur. En particulier, l'invention a pour objectif de proposer un nouveau procédé de traitement en milieu aqueux de déchets spéciaux contenant des métaux lourds et des sels permettant de stabiliser des déchets en vue d'une valorisation en techniques routières incluant un traitement des dioxines.

A cet effet, l'invention a pour objet un procédé de traitement en milieu aqueux de déchets spéciaux contenant des métaux lourds et des sels, selon la revendication 1, selon lequel :
- on approvisionne le déchet sous forme divisée ;
- on soumet le déchet à une étape de maturation, selon laquelle on le conditionne en une suspension aqueuse que l'on fait mûrir à tiède, c'est-à-dire à une température comprise entre 90 et 110°C ;
- on recueille une fraction solide mûrie que l'on soumet à des opérations répétitives de lavage et de séparation liquide/solide jusqu'à ce que la fraction solide réponde aux exigences de non-nocivité pour l'environnement ;
le procédé étant remarquable en ce que préalablement à l'étape de maturation du déchet :
- on effectue un test déterminant la teneur en chlorure de calcium (CaCl₂) du déchet ;
- on effectue un traitement thermique haute température du déchet lorsque le résultat du test montre une teneur en chlorure de calcium inférieure ou égale à une valeur de référence donnée.

Selon des modes particuliers de réalisation, le procédé peut comprendre l'une ou plusieurs des caractéristiques suivantes, prises isolément ou selon toutes les combinaisons techniquement possibles :
- le test déterminant la teneur en chlorure de calcium (CaCl₂) du déchet se fait par spectrométrie de fluorescence X.
- lorsque le résultat du test montre une teneur en chlorure de calcium supérieure à la valeur de référence donnée, on ajoute une quantité supplémentaire d'un déchet présentant une faible teneur en chlorure de calcium de façon à obtenir un mélange de déchets dont la teneur en chlorure de calcium est inférieure à la teneur du déchet, de préférence on ajoute une quantité supplémentaire d'un déchet présentant une faible teneur en chlorure de calcium, suffisante pour ramener la teneur en chlorure de calcium du mélange de déchets ainsi obtenu à une valeur inférieure ou égale à la valeur de référence donnée ; et/ou on effectue une ou plusieurs opérations de prélavage du déchet, ou du mélange de déchets, jusqu'à ramener la teneur en chlorure de calcium à une valeur inférieure ou égale à la valeur de référence donnée ; puis on effectue le traitement thermique haute température.
- on effectue une opération de prélavage du déchet avant d'effectuer le test déterminant la teneur en chlorure de calcium du déchet. Ce test est alors effectué sur un déchet lavé.
- on effectue le traitement thermique haute température du déchet lorsque le résultat du test montre une teneur en chlorure de calcium inférieure ou égale à 20 % en poids de la masse totale du déchet, de préférence inférieure ou égale à 16 %.
- le traitement thermique haute température comprend le chauffage du déchet à une température d'au moins 500°C, de préférence d'au moins 550°C, de préférence d'au moins 700°C, de préférence d'au moins 850°C. De préférence le traitement thermique haute température est appliqué pendant une heure.
- éventuellement, on effectue une trempe du déchet après l'opération de traitement thermique haute température. Une telle trempe n'est pas obligatoire, mais peut être effectuée par précaution.
- l'opération de prélavage s'effectue à l'eau.
- l'opération de prélavage est menée en utilisant un rapport liquide / solide de 5/1 en poids.
- l'opération de prélavage est menée durant au moins une heure.
- lors de l'étape de maturation, on ajoute au déchet conditionné en suspension aqueuse du carbonate de sodium de préférence dans un rapport pondéral inférieur à 30 %.
- l'étape de maturation s'effectue par chauffage à une température comprise entre 90 et 110°C de préférence pendant une durée de 16 à 24 heures.
- le conditionnement en pulpe aqueuse s'effectue par ajout d'une solution aqueuse, par exemple de l'eau, selon un rapport pondéral liquide/solide de 2.
- les opérations successives de lavage sont effectuées sous un rapport liquide/solide n'excédant pas 50 au total, de préférence, elles sont effectuées à l'eau.
- lors des opérations répétitives de lavage on effectue, entre deux lavages successifs, une étape de neutralisation de la fraction solide mûrie en la traitant par un agent chimique permettant d'abaisser son pH.
- l'agent de neutralisation est du dioxyde de carbone.
- ledit pH est abaissé jusqu'à une valeur inférieure ou égale à 9,2.
- l'étape de neutralisation intervient après le premier lavage.
- lors de la mise en oeuvre de l'étape de neutralisation, on mouille la fraction solide mûrie avec de l'eau dans un rapport liquide/solide de 5.

L'invention a également pour objet une installation selon la revendication 9 pour la mise en oeuvre du procédé tel que décrit plus haut comprenant successivement dans le sens des matières à traiter :
- une unité de mouillage chauffante ;
- une unité de lavage l'installation étant remarquable en ce qu'elle comprend en outre préalablement à l'unité de mouillage chauffante, des moyens de détermination de la teneur en CaCl₂ du déchet et une unité de chauffage haute température.

De préférence, les moyens de détermination de la teneur en CaCl₂ du déchet comprennent des moyens de mise en oeuvre d'une spectrométrie de fluorescence X.

Avantageusement, l'installation selon l'invention comprend en outre au moins :
- une unité de prélavage préalablement à l'unité de chauffage haute température ; et/ou
- une unité de mélange et de dosage des déchets de différentes provenances préalablement à l'unité de chauffage haute température ; et/ou
- une unité de chauffage haute température comprenant un four et des moyens de refroidissement du déchet en sortie du four ; et/ou
- une unité de lavage pourvue d'une cuve de neutralisation équipée de moyens de bullage d'un gaz montés au travers du fond de la cuve, de préférence lesdits moyens de bullage sont reliés à une source d'alimentation en gaz constituée par un récupérateur de fumées prélevées dans la cheminée d'un incinérateur, en aval de l'installation d'épuration et de traitement desdites fumées.

Comme on l'aura compris à la lecture de la définition qui vient d'en être donnée, l'invention consiste pour l'essentiel à procéder à un traitement thermique haute température du déchet afin de détruire les dioxines qu'il contient sans pour autant affecter sa structure inertée obtenue par maturation.

Selon un premier aspect de l'invention, la mise en oeuvre de ce traitement thermique doit se faire impérativement préalablement à l'étape de maturation (ou de mûrissement) du déchet. Les expérimentations ont en effet montré que la mise en oeuvre d'un tel traitement thermique haute température sur un déchet mûri par transformation rhéologique déstabilise la structure du déchet si bien qu'il n'est plus en mesure de retenir les métaux lourds qu'il contient. Sa fraction lixiviable est alors fortement polluante et ne répond plus aux exigences de non-nocivité pour l'environnement lui permettant d'être valorisable

Les tests ont permis par ailleurs de déterminer que la composition du déchet a une influence sur la bonne conduite de cette étape de traitement thermique haute température si bien que, selon un deuxième aspect de l'invention, la mise en oeuvre du traitement thermique haute température est conditionnée à l'obtention préalable d'une certaine composition du déchet. De manière surprenante, il a été établi que lorsque le déchet montre une teneur en chlorure de calcium (CaCl₂) trop importante, l'application d'un traitement thermique haute température engendre une prise en masse du déchet qui le rend alors impropre à sa soumission à l'étape de maturation. Par exemple, la mise en oeuvre d'un traitement thermique haute température sur des déchets montrant une teneur en chlorure de calcium de 37, 91 % a conduit à une prise en masse du déchet. C'est pourquoi, au besoin, la teneur en chlorure de calcium du déchet est réajustée avant l'opération de chauffage haute température.

Selon un troisième aspect de l'invention, ce réajustement se fait par un mélange judicieux de déchets de compositions différentes dont le dosage respectif permet d'obtenir un déchet homogène dont la teneur en chlorure de calcium est satisfaisante et/ou par un prélavage du déchet permettant d'extraire une partie des chlorures qu'il contient. Ce prélavage peut être effectué systématiquement de manière préventive et/ou en fonction du résultat de tests effectués.

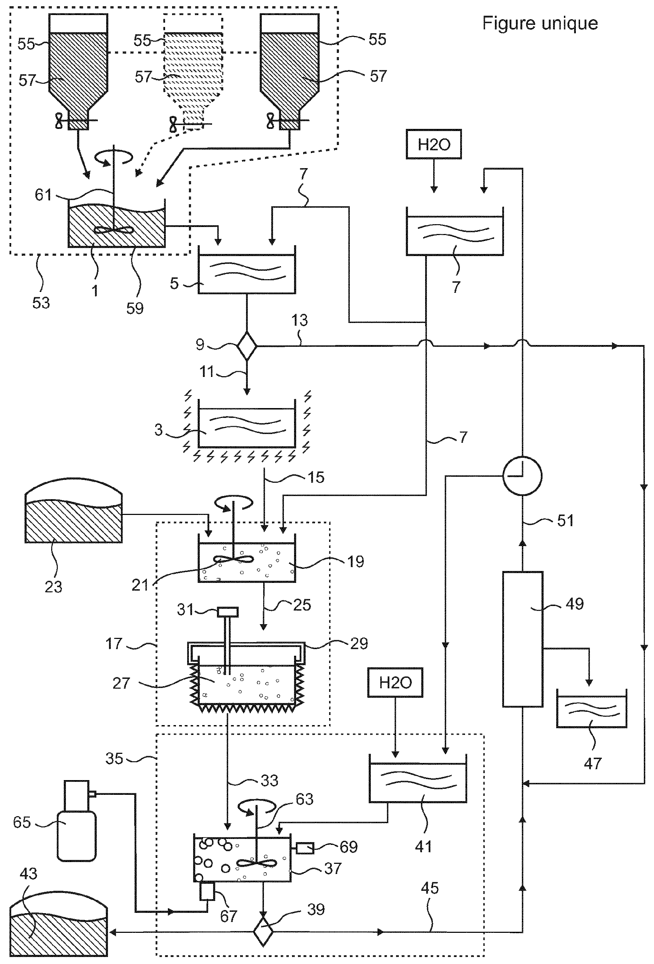

L'invention sera bien comprise et d'autres aspects et avantages apparaîtront clairement au vu de la description qui suit donnée à titre d'exemple et en référence à la planche unique de dessin annexée montrant le schéma fonctionnel général du traitement du déchet.

L'installation comprend au minimum, l'une à la suite de l'autre dans le sens des matières à traiter, une unité de prélavage (5), une unité de chauffage haute température (3), une unité de mouillage chauffante (17) (ou unité de maturation) et une unité de lavage (35).

Le REFIOM (1) est approvisionné sous forme divisée. Lorsque le déchet (1) à traiter provient de différents centres d'incinération, sa composition va varier en fonction de son origine. Néanmoins, les déchets bien qu'ayant des compositions différentes les uns par rapport aux autres, présentent une composition relativement stable selon leur provenance. Ainsi, on aura avantage à mélanger les différents REFIOM dans une unité de mélange et de dosage (53) de manière à obtenir un déchet de composition relativement stable et donc de ne pas avoir à adapter en permanence les conditions de mise en oeuvre du procédé.

Par ailleurs de manière avantageuse, il est rendu possible, en dosant judicieusement l'apport en déchet de chaque provenance et caractérisé par une teneur spécifique en chlorure de calcium (CaCl₂), d'obtenir un mélange dont la composition est connue et conforme aux exigences relatives à la mise en oeuvre du procédé selon l'invention. En particulier, un dosage des déchets de différentes origines permet d'obtenir un déchet formé d'un mélange de déchets, ledit mélange montrant une teneur en chlorure de calcium inférieure à une valeur de référence donnée. L'unité de mélange comprend par exemple une batterie de silos (55) destinés à recevoir les déchets (57), chaque silo (55) étant dédié à un déchet (57) d'une provenance donnée et montrant une teneur en CaCl₂ donnée. L'unité (53) comprend également un bac (59) doté de moyens de mélange (61) permettant de mélanger et d'homogénéiser le mélange de déchets ainsi obtenu.

Dans une première étape, le REFIOM (1) va être traité en vue de la destruction des dioxines qu'il présente. Cette destruction va se faire thermiquement. Le déchet (1) est soumis à un traitement thermique haute température dans une unité de chauffage (3) haute température. A cet effet, on place le déchet (1) dans un four que l'on porte à une température d'au moins 500°C, de préférence d'au moins 550°C, de préférence d'au moins 700 °C, de préférence encore d'au moins 850°C. Le traitement thermique est appliqué pendant un certain temps par exemple, pendant une heure. Il est connu de pouvoir détruire thermiquement les dioxines par l'application d'un traitement thermique à 850°C pendant quelques secondes. Néanmoins, dans le cadre de l'invention, il faut tenir compte, lors de l'application du traitement thermique, d'une part de la faible conductivité thermique du déchet et d'autre part de sa nature spongieuse qui fait que les dioxines sont difficilement accessibles puisque pouvant être formées à la surface interne des pores des grains de REFIOM. Ainsi des dioxines sont formées aux fonds des cavités microscopiques formées par les pores des grains de REFIOM et sont protégées par l'inertie thermique de la matière constitutive desdits grains.

Le déchet sera chauffé dans un four qui est avantageusement un four rotatif. Il est également possible d'envisager l'emploi de fours à grille ou de fours à lit fluidisés. L'emploi d'un tel four rotatif est également avantageux en ce qu'il permet d'éviter de former un gâteau lors du chauffage lorsque le déchet a été lavé préalablement à l'application du traitement thermique haute température. Il est indispensable de procéder à la destruction par voie thermique des dioxines avant de faire mûrir le déchet au risque sinon de déstabiliser la structure obtenue par maturation. Avantageusement des moyens de ventilation (non représentés) sont prévus pour évacuer les fumées et/ou les vapeurs pouvant éventuellement contenir des dioxines. Le circuit d'évacuation des fumées est aménagé pour éliminer tout risque d'émission ultérieure de dioxines reformées dans le four après le traitement thermique.

Selon l'invention, le traitement thermique est mis en oeuvre sur un déchet (1) dont la teneur en sels et en particulier en chlorure de calcium (CaCl₂) a été déterminée comme étant inférieure ou égale à une valeur de référence donnée (ou valeur seuil) pour éviter tout risque de prise en masse du déchet lors de l'opération de traitement thermique qui serait préjudiciable à la bonne mise en oeuvre de la suite du procédé.

Cette détermination de la teneur en chlorure de calcium du déchet peut se faire par tous moyens connus de l'homme du métier. Elle se fait préférentiellement par spectrométrie de fluorescence X.

Ainsi lorsque la teneur en chlorure de calcium est inférieure ou égale à une valeur de référence donnée, le traitement thermique (3) peut être effectué sans risque de prise en masse. Cette valeur de référence (ou valeur seuil) est déterminée par l'expérience et peut varier en fonction de la composition des REFIOM (1) et par exemple en fonction des teneurs des autres sels composant le REFIOM tels que le sulfate de calcium (CaSO₄) ou l'hydroxyde de calcium (Ca(OH)₂).

Les tests effectués sur les déchets R1 et R2 ont donnés les résultats suivants :

| | CaCl₂ (% en poids) | CaSO₄.2H₂O (% en poids) | Ca(OH)₂ (% en poids) | prise en masse |
|---|---|---|---|---|
| R1 | 18,29 | 9,20 | 38,45 | non |
| R2 | 37,91 | 3,03 | 38,20 | oui |

La teneur exacte en chlorure de calcium formant un seuil au-delà duquel le traitement thermique haute température engendre une prise en masse du déchet. Ce seuil est déterminable par l'homme du métier de manière expérimentale. Par mesure de précaution, on choisira de mettre en oeuvre le procédé à une teneur en chlorure de calcium dont la valeur est inférieure à cette valeur seuil. On considèrera dans le cadre de l'invention que le traitement thermique haute température peut être mis en oeuvre sans risque de prise en masse lorsque le déchet présente une teneur en chlorure de calcium inférieure ou égale à 20 %, de préférence inférieure ou égale à 18 %, de préférence encore inférieure ou égale à 16 %. L'obtention d'un déchet montrant une telle teneur de chlorure de calcium étant par ailleurs préférée dans le cadre de l'invention en raison de l'optimisation d'autres paramètres du procédé comme l'ajout du carbonate de sodium (Na₂CO₃) tel que nous le verrons plus tard.

Si la teneur en chlorure de calcium est supérieure à cette valeur de référence donnée, elle peut être diminuée en effectuant au moins une opération de prélavage du déchet avant l'application du traitement thermique haute température.

L'opération de prélavage du déchet s'effectue avant l'opération de traitement thermique haute température. A cette fin, les REFIOM (1) sont introduits dans un bac (5) de prélavage disposé en amont de l'unité de chauffage (3) haute température. Les REFIOM (1) sont mélangés, par exemple durant environ une heure et si nécessaire durant environ deux heures, avec une solution aqueuse (7), avantageusement de l'eau, dans un rapport liquide/solide en poids de 5/1.

Le bac de prélavage (5) est doté en sa sortie d'un séparateur liquide/solide (9) permettant de séparer les REFIOM prélavés (11) du liquide de lavage (13) chargé en chlorures. Au besoin un nouveau test concernant la teneur en chlorure de calcium de la fraction solide (11) est effectué pour s'assurer que ladite teneur en sels est bien inférieure à la valeur de référence pour la mise en oeuvre du procédé. Si ce n'est toujours pas le cas, une ou plusieurs opérations de prélavage supplémentaires sont effectuées jusqu'à ce que le déchet prélavé (11) montre une teneur en chlorure de calcium inférieure à la valeur de référence donnée. Puis le déchet (11) est soumis à l'opération de traitement thermique haute température tel que décrit plus haut. On prendra soin de distinguer les opérations de « prélavage » effectuées avant le murissement du déchet des opérations de lavage répétitives auxquelles est soumis le déchet mûri par transformation rhéologique.

Une autre possibilité, alternative ou complémentaire, pour obtenir un déchet dont la teneur en chlorure de calcium est inférieure ou égale à une valeur de référence donnée est d'ajouter au déchet, ou au mélange de déchets, une quantité supplémentaire d'un déchet présentant une faible teneur en chlorure de calcium, ce qui aura pour conséquence de « diluer » la teneur en chlorure de calcium globale présentée par le déchet. Il est ainsi possible de ramener la teneur en chlorure de calcium du mélange de déchets ainsi obtenu à une valeur inférieure ou égale à la valeur de référence donnée avant d'effectuer le traitement thermique haute température.

Selon l'invention, le traitement thermique haute température comprend éventuellement des moyens (non représentés) pour effectuer une étape de trempe du déchet postérieurement à l'étape de chauffage selon laquelle, le déchet est refroidi par air ou par eau. Le refroidissement forcé du déchet est effectué dans des conditions prévues pour éviter toute reformation des dioxines. La trempe peut se faire de différentes façons. Elle se fait par exemple par trempage du déchet dans l'eau froide. Elle peut se faire en employant un échangeur thermique dans une atmosphère contrôlée. L'échangeur thermique considéré est par exemple un échangeur à spires creuses parcourues par de l'eau.

Les REFIOM traités thermiquement (15) sont alors admis au sein de l'unité de maturation (17). Ils sont introduits dans un bac mélangeur (19) doté de moyens de brassage (21) et y sont malaxés avec une solution aqueuse (par exemple de l'eau) dans un rapport pondéral liquide/solide de 2 jusqu'à formation d'une pulpe. On notera qu'il est possible, en fonction de la nature des REFIOM à traiter d'augmenter ce rapport pondéral jusqu'à 5 par exemple.

De manière optionnelle, du carbonate de sodium (Na₂CO₃) (23) est ajouté en cuve dans un rapport pondéral inférieur à 30 %. Par exemple il est ajouté à raison de 25 % en poids de réactif par rapport à la masse brute de REFIOM à traiter. Il est à noter que le carbonate de sodium peut, de manière alternative, être ajouté après le traitement thermique de mûrissement, et avant les opérations de lavage. L'ajout de carbonate de sodium durant l'étape de maturation comme agent d'accélération de la cinétique de solubilisation des sels est connue de l'homme du métier.

Une fois obtenue, la pulpe (25) (éventuellement additionnée de carbonate de sodium) est dirigée vers une cuve autoclave (27) de mûrissement à paroi métallique chauffante par résistance électrique (ou à double paroi, permettant la circulation contrôlée d'un fluide chauffant, par exemple une huile) et fermée par un couvercle hermétique (29) pour éviter la déperdition de liquide par évaporation. De manière connue, cette cuve est dotée d'une cellule de mesure (31) qui suit en permanence la conductance électrique de la matière dans la cuve (27). La valeur mesurée est comparée avec une valeur de consigne prédéterminée et représentative de la conductance d'une pulpe de référence mûrie afin de permettre un pilotage dynamique de l'étape de maturation si on le souhaite. Pour fixer cependant les idées, ce mûrissement thermique se fait « à tiède », c'est-à-dire à la température d'ébullition de la suspension sous pression atmosphérique (de 90 à110°C par exemple) pendant une durée de 16 à 24 heures.

Au terme de cette étape de maturation, la suspension mûrie (33) est dirigée vers une unité de lavage (35). Cette unité se compose d'un bac de lavage (37) en fonctionnement séquentiel cadencé sur les séquences de lavages, ou d'une batterie de bacs successifs montés en série en fonctionnement continu dont chacun sera affecté à un lavage déterminé dans la séquence considérée. Chaque bac de lavage est doté en sortie d'un séparateur liquide/solide (39). Cette séparation peut se faire par centrifugation, par filtre presse, ou par tout autre moyen adéquat.

On considèrera pour simplifier, que l'unité de lavage comprend un bac unique (37). Le bac de lavage est approvisionné avec une solution de lavage (41), qui peut être simplement de l'eau. Afin d'optimiser le rendement de l'opération de lavage, le bac (37) comprend avantageusement des moyens de brassage (63) ou de mélange du déchet en suspension dans la solution de lavage.

De préférence, le rapport en poids liquide/solide cumulé lors de ces opérations de lavage successives n'excédera pas 50. Toutefois, il peut être procédé au lavage de différentes façons. On peut par exemple, effectuer 5 lavages successifs avec un rapport liquide/solide de 5 ou bien 4 lavages successifs avec un rapport liquide/solide de 10, ou tout autre panachage à condition néanmoins de garder le principe d'une séquence de lavages répétitifs. La durée de contact de la solution de lavage avec le REFIOM est de l'ordre de 2 à 3 heures pour chaque séance de lavage.

De manière optionnelle, lors de l'opération de lavage, et de préférence après le premier lavage, la suspension mûrie (33) est à nouveau mouillée de façon à reformer une suspension aqueuse. Cette remise en suspension se fait avec un rapport liquide/solide de préférence voisin de 5. Durant cette étape, dite de neutralisation, qui va se dérouler dans une cuve de pulpage qui peut être la cuve de lavage (37) même. Durant l'étape de neutralisation, qui va durer environ 2 heures, un agent (65) abaissant le pH est introduit dans la cuve (37). Cet agent est avantageusement du CO₂ introduit par bullage par des injecteurs (67) montés à cet effet au travers du fond de la cuve (37). Le gaz injecté, riche en CO2 sera avantageusement de la fumée épurée (sans particules volantes) produite par l'incinération d'ordures ménagères.

La cuve de lavage (37) est donc avantageusement équipée en sa partie inférieure de moyens de bullage (67) et présente en outre de moyens de brassage (63) afin de permettre une action optimale du CO₂ dans toute la pulpe. Elle est éventuellement équipée de moyens de récupération des gaz (non représentés). Elle est en outre équipée d'un capteur (69) permettant de mesurer le pH en continu de la pulpe durant l'étape de neutralisation.

L'étape de neutralisation sera considérée comme achevée lorsque le pH aura atteint une valeur inférieure ou égale à 9,2.

La pulpe neutralisée subit une opération de séparation liquide/solide. La fraction liquide est dirigée vers une unité (49) de traitement des eaux de lavage (ou unité de désalinisation) tandis que la fraction solide est introduite dans la seconde cuve de lavage (ou reste sur place si les lavages se font dans la même cuve.)

Une séparation liquide/solide finale (39) de la suspension obtenue au terme de l'opération de lavage permet d'extraire la fraction solide inertée (43) en vue de sa valorisation en tant que fine de mâchefer, applicable en techniques routières par exemple.

La fraction liquide (45) est recueillie pour être traitée ultérieurement. De manière connue, la fraction liquide est conditionnée en saumure (47) ou en sels solides au moyen d'une unité de désalinisation (49). Cette unité peut être équipée d'un équipement CMV (compression mécanique de la vapeur) du commerce comprenant à la suite un évaporateur sous vide ou des membranes de nano-filtration par exemple.

L'eau purifiée (51) est redirigée vers l'unité de maturation ou unité de mouillage chauffante (17) ou vers l'unité de lavage (35) ou si besoin vers le bac de prélavage (5). La saumure (47) ou les sels peuvent quant à eux être valorisés comme fondant routier après épuration et/ou évaporation ; ou être traitée selon les techniques connues de stabilisation /consolidation aux liants hydrauliques et aux polysulfures en vue de son stockage en tant que déchet.

Selon une variante de l'invention, l'opération de prélavage est effectuée systématiquement avant d'effectuer au moins un test relatif à la concentration en chlorure de calcium. En effet, la diminution de la teneur en chlorure des REFIOM permet en outre de diminuer le cas échéant l'apport en agent d'accélération de la cinétique de solubilisation.

Le procédé a été appliqué à un déchet R1 montrant une teneur en CaCl₂ inférieure à 20% (dans cet exemple la teneur en CaCl₂ était de 18,29 %). Sa fraction soluble est élevée et représente plus de 48 % de la masse du déchet et essentiellement constituée de sels de chlorures. Son pH est alcalin, caractéristique des REFIOM comprenant de la chaux résiduel. La teneur mesurée en dioxines sur le déchet brut (avant traitement) était de 450 ng TEQ/ kg MS. Après traitement, le déchet montrait une teneur en dioxine de inférieure à 5,8 ng TEQ/ kg MS. On rappelle que la norme réglementaire à respecter pour une valorisation en techniques routières (seuil SETRA) est de 10 ng TEQ/ kg MS. Le procédé selon l'invention permet de traiter un REFIOM de manière à lui faire répondre aux critères de valorisation, ou à une mise en centre de stockage de classe 3.

Le procédé selon l'invention est satisfaisant puisqu'il permet d'aboutir à des résidus traités ayant une fraction lixiviable très faiblement polluante, proche de celle des déchets dits inertes.

Par ailleurs il doit être noté que si l'invention a été conçue pour le traitement des REFIOM, elle n'en demeure pas moins applicable à beaucoup d'autres déchets analogues porteurs de métaux lourds lixiviables en milieux naturels et susceptibles de montrer des dioxines comme par exemple les résidus des centrales thermiques au charbon (cendres volantes, mâchefers,...) ou ceux de la métallurgie (laitiers, fumées d'aciérie électriques, etc...).

## Revendications

1. Procédé de traitement en milieu aqueux de déchets (1) spéciaux contenant des métaux lourds et des sels, selon lequel :
- on approvisionne le déchet (1) sous forme divisée ;
- on soumet le déchet à une étape de maturation (17), selon laquelle on le conditionne en une suspension aqueuse (25) que l'on fait mûrir à tiède ;
- on recueille une fraction solide mûrie (33) que l'on soumet à des opérations répétitives de lavage (35) et de séparation liquide/solide jusqu'à ce que la fraction solide (43) réponde aux exigences de non-nocivité pour l'environnement ;
le procédé étant **caractérisé en ce que** préalablement à l'étape de maturation du déchet :
- on effectue un test déterminant la teneur en chlorure de calcium du déchet (1) ;
- on effectue un traitement thermique haute température (3) du déchet lorsque le résultat du test montre une teneur en chlorure de calcium inférieure ou égale à une valeur de référence donnée.

2. Procédé selon la revendication 1 **caractérisé en ce que** lorsque le résultat du test montre une teneur en chlorure de calcium supérieure à la valeur de référence donnée :
- on ajoute une quantité supplémentaire d'un déchet présentant une faible teneur en chlorure de calcium de façon à obtenir un mélange de déchets dont la teneur en chlorure de calcium est inférieure à la teneur du déchet (1), de préférence on ajoute une quantité supplémentaire d'un déchet présentant une faible teneur en chlorure de calcium, suffisante pour ramener la teneur en chlorure de calcium du mélange de déchets ainsi obtenu à une valeur inférieure ou égale à la valeur de référence donnée ; et/ou
- on effectue une ou plusieurs opérations de prélavage (5) du déchet (1), ou du mélange de déchets, jusqu'à ramener la teneur en chlorure de calcium à une valeur inférieure ou égale à la valeur de référence donnée ;
puis on effectue le traitement thermique haute température (3).

3. Procédé selon l'une des revendications 1 à 2 **caractérisé en ce qu'**on effectue une opération de prélavage (5) du déchet (1) avant d'effectuer le test déterminant la teneur en chlorure de calcium du déchet.

4. Procédé selon l'une des revendications 1 à 3 **caractérisé en ce qu'**on effectue le traitement thermique haute température (5) du déchet (1) lorsque le résultat du test montre une teneur en chlorure de calcium inférieure ou égale à 20 % en poids de la masse totale du déchet, de préférence inférieure ou égale à 16 %.

5. Procédé selon l'une des revendications 1 à 4 **caractérisé en ce que** le traitement thermique haute température (3) comprend le chauffage du déchet à une température d'au moins 500°C, de préférence pendant une heure.

6. Procédé selon l'une des revendications 1 à 5 **caractérisé en ce qu'**on effectue une trempe du déchet après l'opération de traitement thermique haute température (3).

7. Procédé selon l'une des revendications 1 à 6 **caractérisé en ce que** lors de l'étape de maturation (17) on ajoute au déchet conditionné en suspension aqueuse (25) du carbonate de sodium de préférence dans un rapport pondéral inférieur à 30 %.

8. Procédé selon l'une des revendications 1 à 7 **caractérisé en ce que** lors des opération répétitives de lavage (35) on effectue, entre deux lavages successifs, une étape de neutralisation de la fraction solide mûrie (33) en la traitant par un agent chimique permettant d'abaisser son pH, de préférence l'agent de neutralisation est du dioxyde de carbone et/ou ledit pH est abaissé jusqu'à une valeur inférieure ou égale à 9,2.

9. Installation pour la mise en oeuvre du procédé selon l'une des revendications 1 à 8 comprenant successivement dans le sens des matières à traiter :
- une unité de mouillage chauffante (17) ;
- une unité de lavage (35) ;
l'installation étant **caractérisée en ce qu'**elle comprend en outre préalablement à l'unité de mouillage chauffante (17), des moyens de tests de la teneur en chlorure de calcium du déchet et une unité de chauffage haute température (3).

10. Installation selon la revendication 9 **caractérisé en ce qu'**elle comprend en outre au moins :
- une unité de prélavage (5) préalablement à l'unité de chauffage haute température (3) ; et/ou
- une unité de chauffage haute température (3) comprenant un four et des moyens de refroidissement du déchet en sortie du four ; et/ou
- une unité de mélange et de dosage (53) des déchets de différentes provenances préalablement à l'unité de chauffage haute température (3) ; et/ou
- une unité de lavage (35) pourvue d'une cuve de neutralisation équipée de moyens de bullage (67) d'un gaz montés au travers du fond de la cuve, de préférence lesdits moyens de bullage (67) sont reliés à une source d'alimentation en gaz (65) constituée par un récupérateur de fumées prélevée dans la cheminée d'un incinérateur.

## Patentansprüche

1. Verfahren für die Behandlung von schwermetall- und salzhaltigen Abfallstoffen (1) im wässrigen Milieu, wobei,
- der Abfallstoff (1) in getrennter Form zugeführt wird,
- der Abfallstoff einer Reifungsphase (17) unterzogen wird, bei der er in einer wässrigen Lösung (25) konditioniert wird, die man lauwarm reifen lässt;
- ein gereifter fester Anteil (33) entnommen wird, der wiederholten Wasch- (35) und Trennvorgängen in flüssige/feste Bestandteile unterzogen wird, bis der feste Anteil (43) die Anforderungen an die Unbedenklichkeit für die Umwelt erfüllt;
wobei das Verfahren **dadurch gekennzeichnet ist, dass** vor der Reifungsphase des Abfallstoffes:
- ein Test zur Bestimmung des Kalziumchloridgehalts des Abfallstoffes (1) angestellt wird;
- eine Hochtemperaturbehandlung (3) des Abfallstoffes durchgeführt wird, bis das Testergebnis einen Kalziumchloridgehalt ergibt, der höchstens einem festgelegten Referenzwert entspricht.

2. Verfahren nach Anspruch 1, **dadurch gekennzeichnet, dass** für den Fall, dass das Testergebnis einen Kalziumchloridgehalt anzeigt, der höher ist, als der bestimmte Referenzwert:
- eine zusätzliche Menge eines Abfallstoffs zugesetzt wird, der einen geringen Kalziumchloridgehalt aufweist, um eine Abfallmischung zu erhalten, deren Kalziumchloridgehalt geringer ist, als der Gehalt des Abfallstoffes (1), wobei vorzugsweise eine zusätzliche Menge eines Abfallstoffes mit einem geringen Kalziumchloridgehalt zugesetzt wird, die ausreicht, um den Kalziumchloridgehalt der auf diese Weise erhaltenen Abfallmischung auf einen Wert zu senken, der höchstens dem festgelegten Referenzwert entspricht; und/oder
- eine oder mehrere Vorreinigungen (5) des Abfallstoffes (1) oder der Abfallmischung ausgeführt werden, bis der Kalziumchloridgehalt auf einen Wert gesenkt worden ist, der unter dem festgelegten Referenzwert liegt;
und anschließend die Hochtemperaturbehandlung (3) durchgeführt wird.

3. Verfahren nach einem der Ansprüche 1 bis 2, **dadurch gekennzeichnet, dass** man eine Vorreinigung (5) des Abfallstoffes (1) durchführt, bevor der Test zur Bestimmung des Kalziumchloridgehalts des Abfallstoffes durchgeführt wird.

4. Verfahren nach einem der Ansprüche 1 bis 3, **dadurch gekennzeichnet, dass** man die Hochtemperaturbehandlung (3) des Abfallstoffes (1) durchführt, wenn das Testergebnis einen Kalziumchloridgehalt anzeigt, der maximal 20 Gewichtsprozenten des Gesamtgewichts des Abfallstoffes und vorzugsweise höchstens 16% entspricht.

5. Verfahren nach einem der Ansprüche 1 bis 4, **dadurch gekennzeichnet, dass** die Hochtemperaturbehandlung (3) das Erhitzen des Abfallstoffes auf eine Temperatur von mindestens 500°C beinhaltet und dies vorzugsweise während eines Zeitraums von einer Stunde.

6. Verfahren nach einem der Ansprüche 1 bis 5, **dadurch gekennzeichnet, dass** man eine Härtung/Abschreckung des Abfallstoffes nach der Hochtemperaturbehandlung (3) durchführt.

7. Verfahren nach einem der Ansprüche 1 bis 6, **dadurch gekennzeichnet, dass** man während der Reifungsphase (17) dem in wässriger Lösung (25) konditionierten Abfallstoff Natriumkarbonat zusetzt und dies in einem Gewichtsverhältnis von weniger als 30%.

8. Verfahren nach einem der Ansprüche 1 bis 7, **dadurch gekennzeichnet, dass** man anlässlich der wiederholten Waschvorgänge (35) zwischen zwei aufeinanderfolgenden Waschvorgängen eine Phase zur Neutralisierung des gereiften festen Anteils (33) vornimmt, indem er mithilfe einer Chemikalie behandelt wird, die eine Absenkung seines pH-Wertes ermöglicht, wobei es sich bei dem Neutralisierungsmittel vorzugweise um Kohlendioxid handelt und/oder der genannte pH-Wert bis auf einen Wert von höchstens 9,2 abgesenkt wird.

9. Anlage für die Anwendung des Verfahrens nach einem der Ansprüche 1 bis 8, die nacheinander und in der Richtung der zu behandelnden Materialien Folgendes beinhaltet:
- eine Heiz- und Befeuchtungsanlage (17);
- eine Waschanlage (35);
wobei die Anlage **dadurch gekennzeichnet ist, dass** sie außerdem vor der Heiz-und Befeuchtungsanlage (17) Mittel für den Test des Kalziumchloridgehalts des Abfallstoffes und eine Hochtemperaturheizanlage (3) beinhaltet.

10. Anlage nach Anspruch 9, **dadurch gekennzeichnet, dass** sie außerdem mindestens Folgendes beinhaltet:
- eine Vorwaschanlage (5) vor der Hochtemperaturheizantage (3); und/oder
- eine Hochtemperaturheizantage (3), die einen Ofen und Mittel für das Abkühlen des Abfallstoffes am Ausgang des Ofens beinhaltet; und/oder
- eine Misch- und Dosieranlage (53) für die Abfalfstoffe unterschiedlicher Herkunft vor der Hochtemperaturheizanlage (3); und/oder
- eine Waschanlage (35), die mit einem Neutralisierungsbecken ausgestattet ist, das über Mittel für die Herstellung von Gasblasen (67) verfügt, die am Boden des Beckens installiert sind, wobei die genannten Mittel für die Herstellung von Gasblasen (67) an eine Quelle für die Versorgung mit Gas (65) angeschlossen ist, bestehend aus einem Auffanggerät für den Rauch, der dem Kamin einer Verbrennungsanlage entnommen wird.

## Claims

1. Process for treating special waste (1), containing heavy metals and salts, in an aqueous medium, according to which:
- the waste (1) is supplied in divided form;
- the waste is subjected to a maturation step (17), according to which it is conditioned in an aqueous suspension (25) that undergoes warm maturation;
- a matured solid fraction (33) is recovered that is subjected to repetitive operations of washing (35) and of liquid/solid separation until the solid fraction (43) corresponds to the requirements of being non-harmful to the environment;
the process being **characterized in that** prior to the maturation step of the waste:
- a test is carried out that determines the calcium chloride content of the waste (1);
- a high-temperature heat treatment (3) of the waste is carried out when the result of the test reveals a calcium chloride content less than or equal to a given reference value.

2. Process according to Claim 1, **characterized in that** when the result of the test reveals a calcium chloride content greater than the given reference value:
- an additional amount of a waste having a low calcium chloride content is added so as to obtain a mixture of waste, the calcium chloride content of which is less than the content of the waste (1), preferably an additional amount of a waste having a low calcium chloride content is added that is sufficient to bring the calcium chloride content of the mixture of waste thus obtained down to a value less than or equal to the given reference value; and/or
- one or more operations of prewashing (5) of the waste (1), or of the mixture of waste, are carried out until the calcium chloride content is brought down to a value less than or equal to the given reference value;
then the high-temperature heat treatment (3) is carried out.

3. Process according to either of Claims 1 and 2, **characterized in that** an operation of prewashing (5) of the waste (1) is carried out before carrying out the test that determines the calcium chloride content of the waste.

4. Process according to one of Claims 1 to 3, **characterized in that** the high-temperature heat treatment (3) of the waste (1) is carried out when the result of the test reveals a calcium chloride content less than or equal to 20% by weight of the total weight of the waste, preferably less than or equal to 16%.

5. Process according to one of Claims 1 to 4, **characterized in that** the high-temperature heat treatment (3) comprises the heating of the waste at a temperature of at least 500°C, preferably for one hour.

6. Process according to one of Claims 1 to 5, **characterized in that** a quenching of the waste is carried out after the high-temperature heat treatment (3).

7. Process according to one of Claims 1 to 6, **characterized in that** during the maturation step (17), sodium carbonate, preferably in a weight ratio of less than 30%, is added to the waste conditioned in aqueous suspension (25).

8. Process according to one of Claims 1 to 7, **characterized in that** during the repetitive washing operations (35), between two successive washings, a step of neutralizing the matured solid fraction (33) is carried out by treating it with a chemical agent that makes it possible to lower its pH, preferably the neutralizing agent is carbon dioxide and/or said pH is lowered to a value less than or equal to 9.2.

9. Facility for the implementation of the process according to one of Claims 1 to 8, successively comprising, in the direction of the materials to be treated:
- a heated wetting unit (17);
- a washing unit (35);
the facility being **characterized in that** it additionally comprises, prior to the heated wetting unit (17), means for tests of the calcium chloride content of the waste and a high-temperature heating unit (3).

10. The facility according to Claim 9, **characterized in that** it additionally comprises at least:
- a prewashing unit (5) prior to the high-temperature heating unit (3); and/or
- a high-temperature heating unit (3) comprising a furnace and means for cooling the waste at the outlet of the furnace; and/or
- a unit (53) for mixing and metering waste of various origins prior to the high-temperature heating unit (3); and/or
- a washing unit (35) provided with a neutralization tank equipped with gas-bubbling means (67) fitted through the bottom of the tank, preferably said bubbling means (67) are connected to a gas supply source (65) consisting of a recuperator of flue gases drawn off from the chimney of an incinerator.
